# EUROPÄISCHE PATENTSCHRIFT

(11) **EP 1 032 861 B1**
(45) Veröffentlichungstag und Bekanntmachung des Hinweises auf die Patenterteilung: **12.02.2003**
(21) Anmeldenummer: 98962242.8
(22) Anmeldetag: 11.11.1998
(51) Int. Cl.: G02B 27/01, B60K 37/00

(54) **ANZEIGEVORRICHTUNG**
DISPLAY DEVICE
DISPOSITIF D'AFFICHAGE

(30) Priorität: 21.11.1997 DE 19751707
(43) Veröffentlichungstag der Anmeldung: 06.09.2000
(73) Patentinhaber: ROBERT BOSCH GMBH, 70442 Stuttgart (DE)
(72) Erfinder: ESCHLER, Johannes, D-71254 Ditzingen (DE); FIESS, Reinhold, D-77770 Durbach (DE)
(86) Internationale Anmeldenummer: DE9803292
(87) Internationale Veröffentlichungsnummer: WO99027410

(56) Entgegenhaltungen:
- EP-A- 0 177 134
- EP-A- 0 498 395
- DE-A- 19 540 108
- US-A- 4 190 832
- US-A- 5 157 549
- US-A- 5 552 935

## Beschreibung

Die Erfindung betrifft eine Anzeigevorrichtung, insbesondere zur Projektion von Bilddarstellungen mit den im Oberbegriff des Patentanspruchs 1 genannten Merkmalen.

### Stand der Technik

Die Bilddarstellung mit Projektionstechniken wird bei der Datenvisualisierung, beispielsweise in Leitständen, bei der Projektion von Fernsehbildern oder auch als sogenannte Head-up-Displays in Kraftfahrzeugen eingesetzt. Zur Realisierung der Projektionstechnik sind zwei Grundprinzipien bekannt, nämlich aktive und passive Technik. Als aktive Anzeigevorrichtungen werden beispielsweise Kathodenstrahlröhren verwendet. Bei hellem Umgebungslicht sind zur Sicherstellung guter Bildkontraste möglichst hohe Leuchtdichten der projizierten Darstellungen notwendig. Die maximale Leuchtdichte ist bei solchen Kathodenstrahlröhren jedoch begrenzt, da bei zu hohen Beschleunigungsspannungen eine unerwünschte Röntgenstrahlung entsteht. Nachteilig bei derartigen Röhren sind zudem ein hoher Energiebedarf sowie die relativ voluminöse Bauweise.

Weiterhin sind passive Anzeigevorrichtungen mit Projektionstechnik bekannt, bei denen zur Lichterzeugung aufgrund der benötigten Leuchtdichten üblicherweise Bogenlampen eingesetzt werden. Deren Licht wird mit speziellen Reflektoren und Abbildungsoptiken gebündelt und polarisiert. Die Polarisatoren absorbieren einen Teil des durchtretenden Lichts. Der Eingangspolarisator zur Polarisierung des Lichtes für die Anzeigevorrichtung ist entweder separat angebracht oder auf die Oberfläche der Anzeigevorrichtung aufgeklebt und wird mit einem Luftstrom gekühlt, beispielsweise durch ein Kühlgebläse. Die Grenzen für die maximalen Leuchtdichten sind hier durch die Aufheizung und die maximal zulässige Temperatur des Polarisators vorgegeben, da sich dieser durch die Lichtabsorption stark erwärmt. Die maximale Transmission der gesamten Anzeigevorrichtung und damit die erreichbaren Leuchtdichten sind somit durch die maximale Transmission der Polarisatoren begrenzt.

Eine Anzeigevorrichtung gemäß oberbegriff des Anspruchs 1 ist aus US-A-4 190 832 bekannt.

Der Erfindung liegt daher die Aufgabe zugrunde, eine passive Anzeigevorrichtung zur Projektion mit möglichst hoher Leuchtdichte zu schaffen.

### Vorteile der Erfindung

Die erfindungsgemäße Anzeigeeinrichtung mit den im Patentanspruch 1 genannten Merkmalen bietet den Vorteil, daß durch eine spezielle reflektierende Schicht auf der Rückseite einer Flüssigkristallzelle nur Licht mit bestimmter Polarisierung reflektiert wird, Lichtanteile mit anderer Polarisierung können ungehindert durch diese Schicht hindurchtreten. Dadurch können Bilder mit sehr hoher Leuchtdichte projiziert werden, ohne daß Teile der Anzeigevorrichtung stark aufgeheizt werden. Somit ist auch keine zusätzliche Kühlung von Komponenten notwendig, und es ist ein sehr guter optischer Wirkungsgrad darstellbar. Die Anzeigevorrichtung des durch eine Lichtquelle bereitgestellten Lichtes kann unter verschiedenen Winkeln auf die Flüssigkristallzelle treten, vorzugsweise sind jedoch relativ spitze Winkel vorzusehen, da ansonsten das Licht schon an der Oberfläche der Flüssigkristallzelle reflektiert werden könnte. Vorteilhaft ist weiterhin eine Anti-Reflex-Beschichtung der Oberfläche der Flüssigkristallzelle, um auch bei größeren Einfallswinkeln des polarisierenden Lichtes möglichst wenig Reflektionsanteile zu erhalten. Möglich sind auch farbige Abbildungen des einfallenden Lichtes durch an sich bekannte Flüssigkristallanzeigen mit Farbtripeln anstelle einzelner Matrixpunkte. Solche Anzeigevorrichtungen sind zudem gut für den Einsatz in Kraftfahrzeugen geeignet, wo sie als sogenannte Head-up-Displays Verwendung finden können. Eine von der Flüssigkristallzelle und dem darunterliegenden reflektierenden Polarisator gebildete Anzeige kann auf eine Windschutzscheibe des Kraftfahrzeuges projiziert werden und kann dort auch bei hellem Umgebungslicht für gut und klar lesbare Anzeigen sorgen.

Vorteilhafte Ausgestaltungen der Erfindung ergeben sich aus den in den Unteransprüchen genannten Merkma¹ len.

### Zeichnungen

Die Erfindung wird nachfolgend in einem Ausführungsbeispiel anhand der zugehörigen Zeichnungen näher erläutert. Es zeigen:
- Figur 1: eine Prinzipdarstellung einer Anzeigevorrichtung und
- Figur 2: eine Prinzipdarstellung einer als Headup-Display im Kraftfahrzeug eingesetzten Anzeigevorrichtung.

### Beschreibung der Ausführungsbeispiele

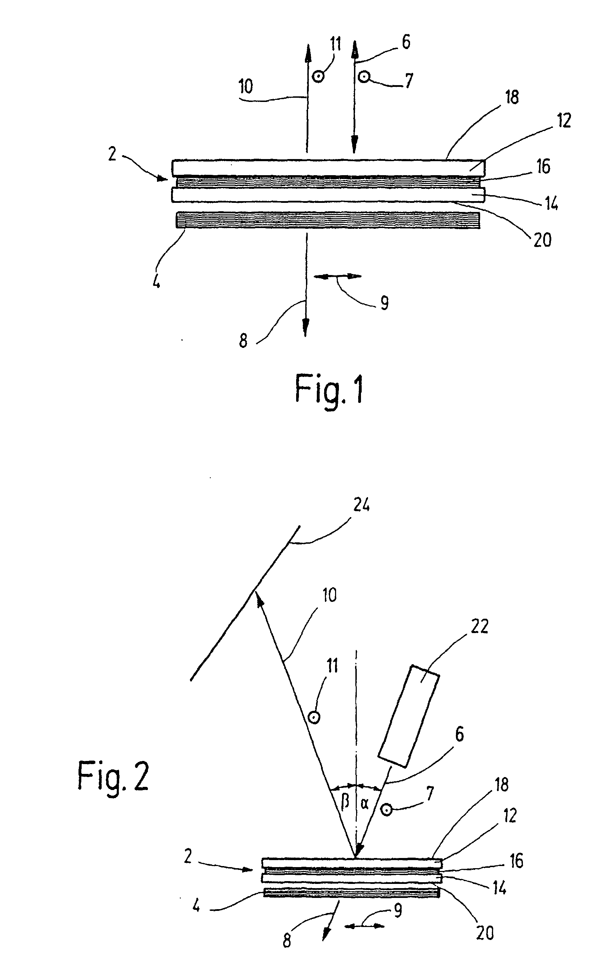

Figur 1 zeigt eine Prinzipdarstellung der erfindungsgemäßen Anzeigevorrichtung. Eine Flüssigkristallzelle 2 besteht aus zwei Glasscheiben 12 und 14, zwischen den sich eine Flüssigkristallschicht 16 befindet. Die Flüssigkristallschicht 16 ist in bekannter Weise in eine Vielzahl von Bildpunkten aufgeteilt, die sich getrennt ansteuern lassen. Durch Anlegen einer Spannung können diese Matrixpunkte der Flüssigkristallzelle 2 aktiviert werden. Bei sogenannten Twisted-Nematic-Flüssigkristallzellen (TN-Zellen) sind die Flüssigkristallmoleküle zwischen den Glasplatten verdrillt (twisted) und weisen im flüssigkristallinen Zustand eine faden- beziehungsweise zigarrenförmige Form (nematic) auf. An der Unterseite 20 der Flüssigkristallzelle 2 ist eine reflektierende Schicht 4 angebracht, die im folgenden als reflektierender Polarisator 4 bezeichnet wird. Das von oben auf die Flüssigkristallzelle 2 einfallende Licht, hier dargestellt durch einen Pfeil 6, weist eine bestimmt Polarisationsrichtung auf. In Figur 1 ist diese Polarisationsrichtung beispielhaft als kreisförmiges Symbol 7 dargestellt, was eine Polarisationsrichtung senkrecht zur Zeichnungsebene bedeutet. Im inaktiven Zustand, das heißt ohne an die Flüssigkristallzelle 2 angelegte äußere Spannung wird das linear polarisierte Eingangslicht 6 von dieser um 90° gedreht. Die Polarisationsebene des einfallenden Lichtes 6 ist somit nach dem Durchtritt durch die Flüssigkristallzelle 2 parallel zur Zeichnungsebene. Der reflektierende Polarisator 4 läßt Licht, das parallel zur Zeichnungsebene polarisiert ist, unbeeinflußt durch. In der gezeigten Darstellung wird dies durch den die Polarisationsrichtung anzeigenden Richtungspfeil 9 des nach unten austretenden Lichtes 8 angedeutet. Dieser Pfeil 9 ist parallel zur Zeichnungsebene ausgerichtet.

Wird die Flüssigkristallzelle 2 dagegen durch Ansteuern einzelner Bildpunkte mittels Anlegen einer äußeren Spannung aktiviert, so wird an diesen Stellen das einfallende linear polarisierte Licht 6 nicht beeinflußt, bleibt somit senkrecht zur Zeichnungsebene polarisiert. Ohne Änderung der Polarisationsrichtung kann das Licht an den aktivierten Stellen durch die Flüssigkristallzelle 2 hindurchtreten. An diesen aktivierten Stellen ist die Polarisationsrichtung des einfallenden Lichtes 6 jedoch senkrecht zur Durchlaßrichtung des reflektierenden Polarisators 4 und wird somit von diesem vollständig reflektiert. Das refiektierte Licht wird durch den Pfeil 10 dargestellt. Die Polarisationsrichtung senkrecht zur Zeichnungsebene des reflektierten Lichtes 10 wird durch das kreisförmige Symbol 11 angedeutet. Die aktivierten Bildpunkte der Flüssigkristallzelle 2 erscheinen in der Projektion des reflektierten Lichtes 10 somit als helle Stellen. Je nach der Anzahl von aktivierbaren Bildpunkten der Flüssigkristallzelle 2 sind damit Projektionen mit niedriger oder höherer Auflösung darstellbar.

Entgegen der in Figur 1 dargestellten prinzipiellen Anordnung mit senkrechtem Lichteinfall des polarisierten Lichtes 6 und entsprechend senkrecht reflektiertem Licht 10 fällt das Licht in praktischen Anwendung vorzugsweise unter einem schrägen Winkel ein, so daß es unter einem entsprechenden Ausfallswinkel reflektiert wird. Der Einfallswinkel ist dabei vorzugsweise so klein, daß der an der Oberfläche 18 der Flüssigkristallzelle 2 reflektierte Lichtanteil möglichst gering ist.

Weiterhin sind neben der beispielhaft beschriebenen Ansteuerung einzelner Bildpunkte der Flüssigkristallzelle, wodurch eine Hell-Dunkel-Projektion entsteht, mit dieser Technik auch Farbdarstellungen möglich. Hierbei sind in bekannter Weise die einzelnen Bildpunkte nochmals in drei Einheiten weiter unterteilt, die getrennt ansteuerbar sind und für eine Farbdarstellung sorgen können. Je nach der Mischung der üblicherweise verwendeten Farbkomponenten Rot, Blau und Grün dieser sogenannten Farbtripel sind alle gewünschten Zwischenfarbtöne realisierbar.

Figur 2 zeigt eine beispielhafte Anordnung für einen Einsatz der Anzeigevorrichtung im Kraftfahrzeug als sogenanntes Head-up-Display. Gleiche Teile wie in Figur 1 sind mit gleichen Bezugszeichen versehen und sind nicht noch einmal näher erläutert. Eine Lichtquelle 22 strahlt linear polarisiertes Licht 6 auf die Oberfläche 18 der Flüssigkristallzelle 2. Der Einfallswinkel α des einfallenden Lichtes 6 ist vorzugsweise ein relativ spitzer Winkel, beispielsweise kleiner als 10°, um den an der Oberfläche 18 der Flüssigkristallzelle reflektierten Lichtanteil möglichst gering zu halten. Mit der Ansteuerung der Bildpunkte der Flüssigkristallzelle 2 wird die Polarisierung des einfallenden Lichtes 6 entsprechend der gewünschten Anzeige um 90° gedreht oder unbeeinflußt gelassen. Die Polarisationsrichtungen von einfallendem Licht 6, durchtretendem Licht 8 und reflektiertem Licht 10 sind wie in Figur 1 mit den Symbolen 7, 9 und 11 verdeutlicht. Diese Symbole 7, 9 und 11 zeigen wiederum die Polarisationsrichtung parallel oder senkrecht zur Zeichnungsebene an.

Der Ausfallswinkel β des am reflektierenden Polarisators 4 reflektierten Lichtanteils 10 ist entsprechend den Gesetzen der Optik gleich dem Einfallswinkel α. Das reflektierte Licht 10 kann dann auf eine Oberfläche projiziert werden, hier beispielsweise eine Windschutzscheibe 24 eines Kraftfahrzeuges. Aufgrund der mit dieser Anzeigevorrichtung darstellbaren hohen Leuchtdichten der projizierten Abbildungen sind sehr helle Head-up-Darstellungen realisierbar, die auch bei stärkerer Sonneneinstrahlung gut erkennbar und ablesbar bleiben. Der durch den reflektierenden Polarisator 4 hindurchtretende Lichtanteil 8 kann beispielsweise auf eine schwarze Fläche treffen und auf diese Weise absorbiert werden.

## Patentansprüche

1. Anzeigevorrichtung, insbesondere zur Projektion von Bilddarstellungen, mit wenigstens einer Flüssigkristallzelle, einer die wenigstens eine Flüssigkristallzelle mit Licht beaufschlagenden Lichtquelle und einem Polarisationsfilter zur Beeinflussung der Bilddarstellung, wobei das Polarisationsfilter als eine Schicht ausgeführt ist und wobei das Polarisationsfilter an der der Lichtquelle abgewandten Seite an der Flüssigkristallzelle angeordnet ist, **dadurch gekennzeichnet, daß** die Lichtquelle Linear polarisiertes Licht emittiert und daß das Polarisationsfilter (4) Licht einer bestimmten Polarisierung reflektiert und zu der bestimmten Polarisierung senkrecht polarisiertes Licht passieren läßt und daß das reflektierte Licht durch die Flüssigkristallzelle (2) auf eine Windschutzscheibe (24) projizierbar ist.

2. Anzeigevorrichtung nach Anspruch 1, wobei die Flüssigkristallzelle (2) eine Vielzahl von einzeln ansteuerbaren Bildpunkten besitzt, die im aktiven Zustand das einfallende polarisierte Licht nicht beeinflussen und im inaktiven Zustand die Polarisationseinrichtung des einfallenden Lichtes um 90° drehen.

3. Anzeigevorrichtung nach Anspruch 2, wobei die Projektion des von der Anzeigevorrichtung projizierten Bildes an der der Lichtquelle (6, 22) zugeordneten Seite der Flüssigkristallzelle erfolgt.

4. Anzeigevorrichtung nach Anspruch 3, wobei die Flüssigkristallzelle (2) eine Twisted-Nematic(TN)-Flüssigkristallzelle ist.

5. Anzeigevorrichtung nach Anspruch 3, wobei die aus der Flüssigkristallzelle (2) und dem reflektierenden Polarisationsfilter (4) bestehende Anzeigevorrichtung ein Negativ-Kontrast-Display ist.

6. Anzeigevorrichtung nach Anspruch 3, wobei die aus der Flüssigkristallzelle (2) und dem reflektierenden Polarisationsfilter (4) bestehende Anzeigevorrichtung ein Positiv-Kontrast-Display ist.

7. Anzeigevorrichtung nach einem der vorhergehenden Ansprüche, wobei die Flüssigkristallzelle (2) eine farbige Abbildung des einfallenden Lichtes (6) ermöglicht.

8. Anzeigevorrichtung nach einem der vorhergehenden Ansprüche, wobei das auf die Anzeigevorrichtung zur Bilddarstellung strahlende Licht in einem schrägen Einfallswinkel auf die Flüssigkristallzelle (2) und den reflektierende Polarisationsfilter (4) auftrifft.

9. Anzeigevorrichtung nach Anspruch 8, die Anzeigevorrichtung zur Head-up-Darstellung in einem Kraftfahrzeug Verwendung findet.

10. Anzeigevorrichtung nach Anspruch 9, wobei die von der Flüssigkristallzelle (2) und dem reflektierenden Polarisationsfilter (4) gebildete Anzeige auf eine Windschutzscheibe (24) eines Kraftfahrzeuges projiziert wird.

## Claims

1. Display apparatus, in particular for projection of picture displays, having at least one liquid crystal cell, a light source which applies light to the at least one liquid crystal cell, and a polarization filter for influencing the picture display, with the polarization filter being in the form of a layer, and with the polarization filter being arranged on the side of the liquid crystal cell facing away from the light source, **characterized in that** the light source emits linear polarized light and **in that** the polarization filter (4) reflects light with a specific polarization and allows light which is polarized at right angles to the specific polarization to pass, and **in that** the reflected light can be projected through the liquid crystal cell (2) onto a windscreen (24).

2. Display apparatus according to Claim 1, with the liquid crystal cell (2) having a large number of pixels which can be driven individually, do not influence the incident polarized light in the active state and rotate the polarization direction of the incident light through 90° in the inactive state.

3. Display apparatus according to Claim 2, with the projection of the picture which is projected by the display apparatus being produced on the side of the liquid crystal cell associated with the light source (6, 22).

4. Display apparatus according to Claim 3, with the liquid crystal cell (2) being a twisted nematic (TN) liquid crystal cell.

5. Display apparatus according to Claim 3, with a display apparatus, which comprises the liquid crystal cell (2) and the reflective polarization filter (4), being a negative contrast display.

6. Display apparatus according to Claim 3, with the display apparatus, which comprises the liquid crystal cell (2) and the reflective polarization filter (4), being a positive contrast display.

7. Display apparatus according to one of" the preceding claims, with the liquid cell (2) allowing coloured imaging of the incident light (6).

8. Display apparatus according to one of the preceding claims, with the light which shines onto the display apparatus for the picture display striking the liquid crystal cell (2) and the reflective polarization filter (4) at an oblique incidence angle.

9. Display apparatus according to Claim 8, with the display apparatus being used for a head up display in a motor vehicle.

10. Display apparatus according to Claim 9, with the display which is formed by the liquid crystal cell (2) and the reflective polarization filter (4) being projected onto a windscreen (24) of a motor vehicle.

## Revendications

1. Dispositif d'affichage, notamment pour la projection de représentations d'images, comportant au moins une cellule à cristaux liquides, au moins une source lumineuse sollicitant au moins la cellule à cristaux liquides et un filtre de polarisation pour influencer l'image reproduite, le filtre de polarisation étant réalisé sous la forme d'une couche et étant prévu sur la face de la cellule à cristaux liquides à l'opposé de la source lumineuse,
**caractérisé en ce que**
la source lumineuse émet de la lumière à polarisation linéaire et le filtre de polarisation (4) réfléchit la lumière avec une certaine polarisation et laisse passer la lumière polarisée perpendiculairement à cette certaine polarisation, et la lumière réfléchie est projetée à travers la cellule à cristaux liquides (2) sur un pare-brise (24).

2. Dispositif d'affichage selon la revendication 1, selon lequel
la cellule à cristaux liquides (2) comporte un grand nombre de points images commandés séparément, qui n'influencent pas la lumière polarisée, l'incidence, lorsqu'elles sont à l'état actif, alors qu'à l'état inactif, elles tournent de 90° la polarisation de la lumière incidente.

3. Dispositif d'affichage selon la revendication 2, selon lequel
la projection de l'image projetée par le dispositif d'affichage se fait sur la face de la cellule à cristaux liquides associée à la source lumineuse, (6, 22).

4. Dispositif d'affichage selon la revendication 3, selon lequel
la cellule à cristaux liquides (2) est une cellule à cristaux liquides nématique torsadée (TN).

5. Dispositif d'affichage selon la revendication 3, selon lequel
le dispositif d'affichage formé de la cellule à cristaux liquides (2) et du filtre de polarisation à réflexion (4) est un afficheur à contraste négatif.

6. Dispositif d'affichage selon la revendication 3, selon lequel
le dispositif d'affichage formé de la cellule à cristaux liquides (2) et du filtre de polarisation réfléchissant (4) est un afficheur à contraste positif.

7. Dispositif d'affichage selon l'une quelconque des revendications précédentes, selon lequel
la cellule à cristaux liquides (2) donne une image en couleur de la lumière incidente (6).

8. Dispositif d'affichage selon l'une quelconque des revendications précédentes, selon lequel
la lumière rayonnée sur le dispositif d'affichage pour former l'image arrive avec un angle d'incidence en biais sur la cellule à cristaux liquides (2) et le filtre de polarisation réfléchissant (4).

9. Dispositif d'affichage selon la revendication 8, selon lequel
le dispositif d'affichage est appliqué à un affichage collimateur (bead-up) dans un véhicule.

10. Dispositif d'affichage selon la revendication 9, selon lequel
l'afficheur formé par la cellule à cristaux liquides (2) et le filtre à polarisation réfléchissante (4) est projeté sur le pare-brise (24) d'un véhicule automobile.
